# EUROPEAN PATENT APPLICATION

(11) **EP 4 726 002 A1**
(43) Date of publication of application: **15.04.2026**
(21) Application number: 24819346.8
(22) Date of filing: 05.06.2024
(51) Int. Cl.: C09D 193/04, C09D 5/16, C09D 7/63, C09D 7/65, C09D 133/14, C09D 143/00

(54) **UNDERWATER ANTI-FOULING COATING MATERIAL COMPOSITION**

(30) Priority: 07.06.2023 JP 2023094043
(71) Applicant: Chugoku Marine Paints, Ltd., Hiroshima 739-0652 (JP)
(72) Inventor: TANINO Soichiro, Otake-shi, Hiroshima 739-0652 (JP); OSAWA Keisuke, Otake-shi, Hiroshima 739-0652 (JP); KANEKO Kyoichiro, Otake-shi, Hiroshima 739-0652 (JP)
(74) Representative: Hoffmann Eitle
(86) International application number: PCT/JP2024/020460
(87) International publication number: WO 2024/253118

(57) **Abstract**

One embodiment of the present invention relates to an underwater antifouling coating composition, an antifouling coating film, a substrate with an antifouling coating film or a method for producing the same, or an antifouling method for a substrate, and the underwater antifouling coating composition contains a hydrolyzable (co)polymer (A) having a constituent unit derived from a hydrolyzable group-containing monomer, a rosin compound (B), and an antifouling agent (C), the rosin compound (B) contains a rosin compound monomer (B1) and a rosin compound multimer (B2), a content of the multimer (B2) with respect to 1 part by mass of the content of the monomer (B1) is 0.07 to 5 parts by mass, and a total content of the (co)polymer (A) and the rosin compound (B) with respect to 100 mass% of a solid content of the underwater antifouling coating composition is 5 to 40 mass%.

## Description

### Technical Field

One embodiment of the present invention relates to an underwater antifouling coating composition, an antifouling coating film, a substrate with an antifouling coating film or a method for producing the same, or an antifouling method for a substrate.

### Background Art

In order to avoid an underwater structure such as a ship bottom from suffering an economic loss caused by, for example, an increase in propulsion resistance due to adhesion of aquatic organisms, or damage due to erosion by aquatic organisms, an antifouling method for the underwater structure by applying an antifouling coating composition to a surface thereof to form an antifouling coating film is generally adopted.

As such an antifouling method, a method of forming an antifouling coating film containing a hydrolyzable (co)polymer on the surface of a substrate is widely used. The antifouling coating film containing such a hydrolyzable (co)polymer exhibits an antifouling property as the hydrolysis of the (co)polymer progresses, the surface of the antifouling coating film becomes hydrophilic, and the hydrophilic portion is consumed (the antifouling coating film is renewed) by, for example, a water flow, in water (sea water).

As an antifouling coating composition for forming an antifouling coating film exhibiting an antifouling property when such an antifouling coating film is consumed (the antifouling coating film is renewed), for example, Patent Literature 1 describes an antifouling coating composition that contains a rosin compound and an organosilyl ester group-containing polymer and is capable of forming an antifouling coating film whose coating film consumption property does not change over time and is at a given rate or higher.

### Citation List

### Patent Literature

Patent Literature 1: JP H10-030071 A

### Summary of Invention

### Technical Problem

It has been found that an antifouling coating film formed from an antifouling coating composition containing an organosilyl ester group-containing polymer as described in Patent Literature 1 exhibits an excellent antifouling property against aquatic (subsea) organisms, but when the temperature of an environment (for example, sea water) in which the antifouling coating film is placed changes, the coating film consumption rate greatly changes. For example, it has been found that in a ship on which the conventional antifouling coating film is formed, depending on a sea area in which the ship navigates, in a low temperature sea area, a consumption rate of the antifouling coating film becomes smaller than an assumed consumption rate (designed consumption rate) of the antifouling coating film, and the antifouling property becomes insufficient, and in a high temperature sea area, the consumption rate of the antifouling coating film exceeds the designed consumption rate, and the antifouling coating film disappears early, and antifouling of the substrate (ship) can no longer be carried out.

In addition, for example, the surface roughness of the surface of a ship may be increased or a coating film such as an anticorrosive coating film formed under an antifouling coating film may be damaged by collision with sea surface and a floating object in the sea, damage due to a wood block at the time of shipbuilding, or damage due to a fender installed on a quay. In particular, during, for example, shipbuilding, a ship is temporarily placed on a wood block, and the antifouling coating film in contact with the wood block is damaged such that a mark of the wood block remains or the periphery thereof is raised.

Since such a damaged antifouling coating film requires, for example, repair, the antifouling coating film is also required to have, for example, damage resistance (wood block resistance) from the viewpoint that, for example, the time and cost taken for, for example, the repair can be reduced.

One embodiment of the present invention provides an underwater antifouling coating composition which is excellent in wood block resistance and antifouling property, has little temperature dependence of the consumption degree of an antifouling coating film (hereinafter also referred to as "consumption degree temperature dependence"), and is capable of forming an antifouling coating film having a stable coating film consumption degree.

### Solution to Problem

As a result of intensive studies by the present inventors, it has been found that the above problem can be solved according to the following configuration example, and the present invention has been completed.

A configuration example of the present invention is as follows.
[1] An underwater antifouling coating composition, containing
   a hydrolyzable (co)polymer (A) having a constituent unit derived from a hydrolyzable group-containing monomer, a rosin compound (B), and an antifouling agent (C), wherein
   the rosin compound (B) contains a rosin compound monomer (B1) and a rosin compound multimer (B2),
   a content of the multimer (B2) with respect to 1 part by mass of the content of the monomer (B1) is 0.07 to 5 parts by mass, and
   a total content of the (co)polymer (A) and the rosin compound (B) with respect to 100 mass% of a solid content of the underwater antifouling coating composition is 5 to 40 mass%.
[2] The underwater antifouling coating composition according to [1], wherein the (co)polymer (A) contains a constituent unit derived from a silyl ester group-containing monomer (a1) represented by a formula (1) below:

   X-SiR¹R²R³ (1)

   in the formula (1), X represents an ethylenically unsaturated acyloxy group, and R¹ to R³ each independently represent a linear or branched alkyl group having 1 to 20 carbon atoms, an alicyclic alkyl group having 3 to 10 carbon atoms, or an aromatic group having 6 to 20 carbon atoms.
[3] The underwater antifouling coating composition according to [2], wherein the R¹ to R³ are each an isopropyl group.
[4] The underwater antifouling coating composition according to [2] or [3], wherein the silyl ester group-containing monomer (a1) is triisopropylsilyl methacrylate.
[5] The underwater antifouling coating composition according to any one of [1] to [4], wherein a content of the rosin compound (B) with respect to 1 part by mass of the content of the (co)polymer (A) is 0.1 to 2 parts by mass.
[6] The underwater antifouling coating composition according to any one of [1] to [5], wherein the content of the multimer (B2) with respect to 1 part by mass of the content of the (co)polymer (A) is 0.01 to 1 part by mass.
[7] The underwater antifouling coating composition according to any one of [1] to [6], wherein
   the antifouling agent (C) contains cuprous oxide, and
   a content of the cuprous oxide with respect to 100 mass% of the solid content of the underwater antifouling coating composition is 30 to 80 mass%.
[8] The underwater antifouling coating composition according to any one of [1] to [7], further containing a pigment (D).
[9] An antifouling coating film formed from the underwater antifouling coating composition according to any one of [1] to [8].
[10] A substrate with an antifouling coating film, including a substrate and the antifouling coating film according to [9].
[11] A method for producing a substrate with an antifouling coating film, including a step of providing the underwater antifouling coating composition according to any one of [1] to [8] on at least a part of a substrate, followed by drying.
[12] An antifouling method for a substrate, including a step of forming the antifouling coating film according to [9] on at least a part of a substrate.

### Advantageous Effects of Invention

According to an embodiment of the present invention, it is possible to form an antifouling coating film that is excellent in wood block resistance (damage resistance) and antifouling property, has little consumption degree temperature dependence, and has a stable coating film consumption degree. Therefore, according to an embodiment of the present invention, it is possible to form an antifouling coating film that is less likely to be damaged, and thus it is possible to reduce the time and cost taken for, for example, repair required when the damage occurs, and it is possible to exhibit an antifouling property as expected even when the seawater temperature changes due to, for example, a change in the navigation sea area.

### Brief Description of Drawings

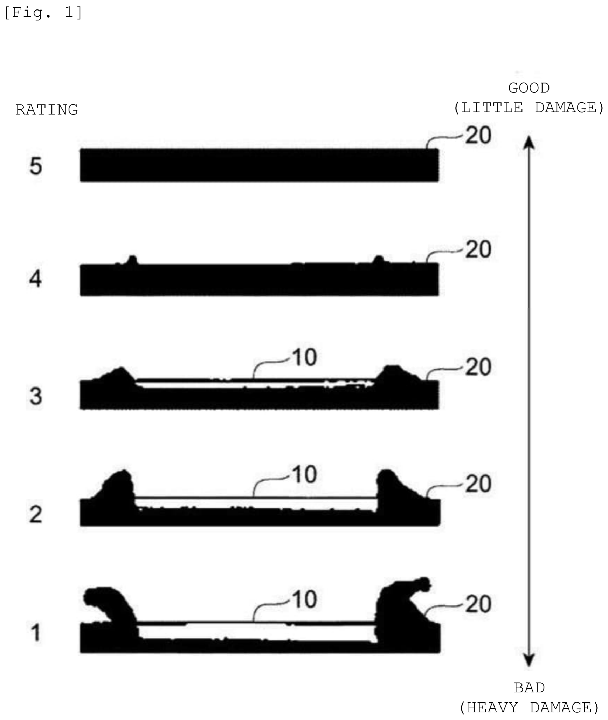

Fig. 1 is a schematic view showing evaluation criteria in a wood block resistance test in examples.

### Description of Embodiments

### <<Underwater antifouling coating composition>>

The underwater antifouling coating composition according to an embodiment of the present invention (hereinafter also referred to as "present composition") is a composition, which contains
a hydrolyzable (co)polymer (A) having a constituent unit derived from a hydrolyzable group-containing monomer, a rosin compound (B), and an antifouling agent (C), and in which
the rosin compound (B) contains a rosin compound monomer (B1) and a rosin compound multimer (B2),
a content of the multimer (B2) with respect to 1 part by mass of the content of the monomer (B1) is 0.07 to 5 parts by mass, and
a total content of the (co)polymer (A) and the rosin compound (B) with respect to 100 mass% of a solid content of the present composition is 5 to 40 mass%.

### <Hydrolyzable (co)polymer (A)>

The hydrolyzable (co)polymer (A) is not particularly limited as long as it is a (co)polymer having a constituent unit derived from a hydrolyzable group-containing monomer.

The (co)polymer (A) used in the present composition may be of one type or two or more types.

In the present invention, the "(co)polymer having a constituent unit derived from a monomer Z" means a polymer and/or a copolymer obtained by, for example, a polymerization reaction or a chain transfer reaction using the monomer Z.

The weight average molecular weight (Mw) of the (co)polymer (A) is preferably 3,000 to 70,000 and more preferably 10,000 to 50,000 from the viewpoint that, for example, the present composition excellent in coating application workability can be easily obtained and an antifouling coating film excellent in coating film strength can be easily formed.

The molecular weight distribution (Mw/Mn) of the (co)polymer (A) is not particularly limited, but is preferably 20 or less, more preferably 6 or less, and preferably 1 or more, more preferably 2 or more from the viewpoint that, for example, a uniform present composition can be easily obtained.

The Mw and number average molecular weight (Mn) of the (co)polymer (A) can be measured by the method described in examples.

The content of the (co)polymer (A) in the present composition is preferably 4 to 35 mass%, more preferably 8 to 30 mass%, and still more preferably 12 to 25 mass% with respect to 100 mass% of the solid content of the present composition.

When the content of the (co)polymer (A) is within the above range, an antifouling coating film which is excellent in antifouling property and has a stable coating film consumption degree can be easily formed.

The "solid content" of the present composition means components other than the solvent in the present composition, and one obtained by drying the present composition in a hot air dryer at 105°C for 1 hour is defined as the solid content.

### [Constituent unit derived from silyl ester group-containing monomer (a1)]

The (co)polymer (A) preferably contains a constituent unit derived from a silyl ester group-containing monomer (a1) represented by a formula (1) below from the viewpoint that, for example, an antifouling coating film excellent in antifouling property against aquatic (subsea) organisms can be easily formed.

When the (co)polymer (A) has a constituent unit derived from the monomer (a1), the constituent unit contained in the (co)polymer (A) may be of one type or two or more types.

X-SiR¹R²R³ (1)

In the formula (1), X represents an ethylenically unsaturated acyloxy group, and R¹ to R³ each independently represent a linear or branched alkyl group having 1 to 20 carbon atoms, an alicyclic alkyl group having 3 to 10 carbon atoms, or an aromatic group having 6 to 20 carbon atoms.

Examples of the X include an acryloyloxy group, a methacryloyloxy group, a ((meth)acryloyloxy)alkylcarboxy group, a maleinoyloxy group, a fumaroyloxy group, an itaconoyloxy group, and a citraconoyloxy group, and among these groups, an acryloyloxy group and a methacryloyloxy group are preferable, and a methacryloyloxy group is more preferable from the viewpoint that, for example, an antifouling coating film excellent in long-term antifouling property and water resistance can be easily formed.

In the present description, "(meth)acryloyl", "(meth)acrylate ", "(meth)acrylic acid ", and "(meth)acrylic " mean "acryloyl and/or methacryloyl", "acrylate and/or methacrylate", "acrylic acid and/or methacrylic acid", and "acrylic and/or methacrylic", respectively.

The number of carbon atoms of the alkyl group in R¹ to R³ is preferably 1 to 12, more preferably 1 to 8, and still more preferably 1 to 4.

The number of carbon atoms of the alicyclic alkyl group in R¹ to R³ is preferably 3 to 8 and more preferably 4 to 7.

The number of carbon atoms of the aryl group in R¹ to R³ is preferably 6 to 14 and more preferably 6 to 10.

From the viewpoint that, for example, an antifouling coating film having moderate hydrolyzability and excellent in long-term antifouling property and water resistance can be easily formed, it is preferable that R¹ to R³ are each independently a methyl group, an ethyl group, an isopropyl group, a n-propyl group, a sec-butyl group, a n-butyl group, or a phenyl group, it is more preferable that R¹ to R³ are all an isopropyl group, a n-propyl group, a sec-butyl group, or a n-butyl group, and it is still more preferable that R¹ to R³ are all an isopropyl group.

Preferred examples of the monomer (a1) include a trialkylsilyl (meth)acrylate, an alkyldiarylsilyl (meth)acrylate, an aryldialkylsilyl (meth)acrylate, a silyl maleate monomer, and a silyl fumarate monomer. Among them, trialkylsilyl (meth)acrylate is more preferable.

Examples of the trialkylsilyl (meth)acrylate include trimethylsilyl (meth)acrylate, triethylsilyl (meth)acrylate, triisopropylsilyl (meth)acrylate, tri-n-propylsilyl (meth)acrylate, tri-sec-butylsilyl (meth)acrylate, and tri-n-butylsilyl (meth)acrylate. Among them, triisopropylsilyl (meth)acrylate is more preferable, and triisopropylsilyl methacrylate is particularly preferable from the viewpoint that, for example, an antifouling coating film excellent in internal water resistance can be easily formed.

Examples of the alkyldiarylsilyl (meth)acrylate include methyldiphenylsilyl (meth)acrylate, ethyldiphenylsilyl (meth)acrylate, isopropyldiphenylsilyl (meth)acrylate, n-propyldiphenylsilyl (meth)acrylate, sec-butyldiphenylsilyl (meth)acrylate, and n-butyldiphenylsilyl (meth)acrylate.

Examples of the aryldialkylsilyl (meth)acrylate include phenyldimethylsilyl (meth)acrylate, phenyldiethylsilyl (meth)acrylate, phenyldiisopropylsilyl (meth)acrylate, phenyl di-n-propylsilyl (meth)acrylate, phenyl di-sec-butylsilyl (meth)acrylate, and phenyl di-n-butylsilyl (meth)acrylate.

Examples of the silyl maleate monomer include triethylsilylethyl maleate, tri-n-propylsilyl n-propyl maleate, triisopropylsilylmethyl maleate, tri-n-butylsilyl n-butyl maleate, and tri-n-hexylsilyl n-hexyl maleate.

Examples of the silyl fumarate monomer include triethylsilylethyl fumarate, tri-n-propylsilyl n-propyl fumarate, triisopropylsilylmethyl fumarate, tri-n-butylsilyl n-butyl fumarate, and tri-n-hexylsilyl n-hexyl fumarate.

The constituent unit derived from the monomer (a1) is hydrolyzed to have a structure similar to the constituent unit derived from X-H [the X has the same meaning as X in the formula (1)]. Therefore, in the (co)polymer (A), a part of the constituent unit derived from the monomer (a1) may have the same structure as the constituent unit derived from X-H by hydrolysis. In addition, the constituent unit generated by hydrolysis may react with another component such as a metal oxide that can be contained in the present composition to further form a metal ester.

When the (co)polymer (A) has a constituent unit derived from the monomer (a1), the content of the constituent unit is preferably 10 to 90 mass%, more preferably 30 to 80 mass%, still more preferably 40 to 80 mass%, and particularly preferably 40 to 70 mass% with respect to 100 mass% of all constituent units of the (co)polymer (A) from the viewpoint that, for example, an antifouling coating film excellent in water resistance and having a moderate hydrolysis rate can be easily formed.

The content (mass%) of the constituent unit derived from each monomer in the (co)polymer (A) can be calculated from the charged amount (mass%) of each monomer used when the (co)polymer (A) is synthesized.

The content of the constituent unit derived from each monomer may be determined by analyzing the obtained (co)polymer (A) or the (co)polymer (A) isolated from the present composition, for example, by mass spectrometry, infrared spectroscopy (IR), nuclear magnetic resonance spectroscopy (NMR), an inductively coupled plasma mass spectrometer (ICP-MS), or inductively coupled plasma atomic emission spectrometry (ICP-AES).

### [Constituent unit derived from another monomer (a2)]

The (co)polymer (A) may have a constituent unit derived from another monomer (a2) other than the monomer (a1), and preferably has the constituent unit.

The another monomer (a2) is a monomer copolymerizable with the monomer (a1).

When the (co)polymer (A) has a constituent unit derived from the monomer (a2), the constituent unit contained in the (co)polymer (A) may be of one type or two or more types.

Examples of the another monomer (a2) include an organosiloxane-containing monomer (a21), an alkoxyalkyl (meth)acrylate or an aryloxyalkyl (meth)acrylate (a22), an alkyl (meth)acrylate or an aryl (meth)acrylate (a23), a hydroxyalkyl (meth)acrylate (a24), a glycidyl (meth)acrylate (a25), an unsaturated carboxylic acid compound (a26), a metal ester group-containing unsaturated monomer (a27), and another vinyl compound (a28).

Among them, as the another monomer (a2), it is preferable to contain an organosiloxane-containing monomer (a21) and/or an alkoxyalkyl (meth)acrylate or an aryloxyalkyl (meth)acrylate (a22) from the viewpoint that, for example, an antifouling coating film excellent in antifouling property can be easily formed, it is preferable to contain an alkyl (meth)acrylate or an aryl (meth)acrylate (a23) from the viewpoint that, for example, an antifouling coating film excellent in coating film strength can be easily formed, and it is preferable to contain an unsaturated carboxylic acid compound (a26) from the viewpoint that, for example, an antifouling coating film excellent in retention of aesthetic appearance (such as gloss or outer appearance) over time can be easily formed, and an antifouling coating film excellent in crack resistance after immersion in water can be easily formed.

When the (co)polymer (A) has a constituent unit derived from the monomer (a2), the content of the constituent unit is preferably 10 to 90 mass%, more preferably 20 to 70 mass%, still more preferably 20 to 60 mass%, and particularly preferably 30 to 60 mass% with respect to 100 mass% of all constituent units of the (co)polymer (A) from the viewpoint that, for example, an antifouling coating film having a moderate hydrolysis rate can be easily formed.

### · Organosiloxane-containing monomer (a21)

The (co)polymer (A) may contain a constituent unit derived from the organosiloxane-containing monomer (a21).

When the (co)polymer (A) has a constituent unit derived from the monomer (a21), the constituent unit contained in the (co)polymer (A) may be of one type or two or more types.

Examples of the organosiloxane-containing monomer (a21) include a compound having a structure represented by a formula (II) below.

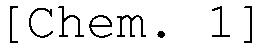

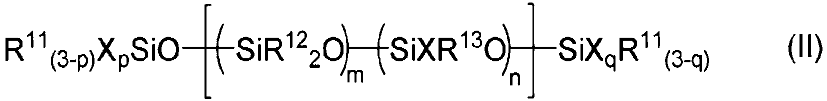

In the formula (II), R¹¹ to R¹³ each independently represent a monovalent hydrocarbon group, X's each independently represent a (meth)acryloyloxyalkyl group or a mercaptoalkyl group, m and n are each independently 0 or more, p and q are each independently 0 or 1, and n + p + q is 1 or more.

In the present description, when two or more different repeating units are described in parallel between parentheses [ ], it indicates that these repeating units may be repeated in any state and order of a random form, an alternate form, and a block form. That is, for example, a formula -[Y₃-Z₃]-(here, Y and Z each represent a repeating unit) may be in a random form such as -YYZYZZ-, an alternate form such as - YZYZYZ-, or a block form such as -YYYZZZ- or -ZZZYYY-.

Examples of the monovalent hydrocarbon group in R¹¹ to R¹³ include groups similar to those in the R¹ to R³, and from the viewpoint of, for example, ease of polymerization, an alkyl group is preferable, an alkyl group having 1 to 6 carbon atoms is more preferable, an alkyl group having 1 to 4 carbon atoms is still more preferable, and a methyl group, an ethyl group, a propyl group, and a butyl group are particularly preferable.

X in the formula (II) is preferably a (meth)acryloyloxyalkyl group from the viewpoint that, for example, uniform (co)polymerization can be easily performed, and is preferably a mercaptoalkyl group from the viewpoint that, for example, the (co)polymer (A) having a low viscosity and excellent handleability can be easily obtained.

The (meth)acryloyloxyalkyl group in X in the formula (II) is a group represented by a formula (III) below.

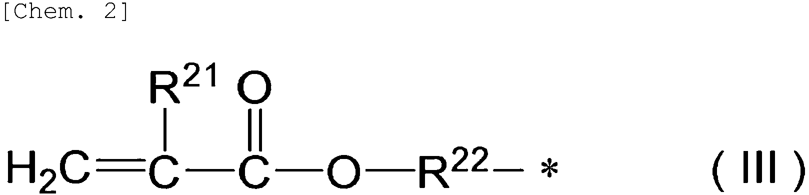

In the formula (III), R²¹ represents a hydrogen atom or a methyl group, R²² represents an alkylene group, and * represents a bonding position with Si to which the (meth)acryloyloxyalkyl group is bonded.

The alkylene group in R²² may be linear or branched, and the number of carbon atoms of the alkylene group is preferably 1 to 12, more preferably 2 to 6, and still more preferably 2 to 4 from the viewpoint of, for example, reactivity.

The mercaptoalkyl group in X in the formula (II) is a group represented by a formula (IV) below.
[Chem. 3]

**HS―R²³―*** **(IV)**

In the formula (IV), R²³ represents an alkylene group, and * represents a bonding position with Si to which the mercaptoalkyl group is bonded.

The alkylene group in R²³ may be linear or branched, and the number of carbon atoms of the alkylene group is preferably 1 to 12, more preferably 2 to 6, and still more preferably 2 to 4 from the viewpoint of, for example, reactivity.

Examples of X in the formula (II) include a 2-(meth)acryloyloxyethyl group, a 3-(meth)acryloyloxypropyl group, a 4-(meth)acryloyloxybutyl group, a mercaptomethyl group, a 2-mercaptoethyl group, a 2-mercaptopropyl group, a 3-mercaptopropyl group, and a 4-mercaptobutyl group.

In the formula (II), m and n denote the average number of added moles of (SiR¹²₂O) and the average number of added moles of (SiXR¹³O), respectively.

m+n in the formula (II) is preferably 2 or more. That is, the compound represented by the formula (II) preferably has a polyorganosiloxane moiety.

As one form of the (co)polymer (A), it is preferable to have a constituent unit derived from a compound (a211) in which n is 0, p is 1, and q is 0 in the formula (II).

The present composition containing the (co)polymer (A) having a constituent unit derived from such a compound (a211) is preferable in that an antifouling coating film having a particularly excellent antifouling property can be easily formed.

In the compound (a211), m is preferably 3 to 200 and more preferably 5 to 70 from the viewpoint of, for example, ease of polymerization.

As the compound (a211), a commercially available product can be used. Examples of the commercially available product include FM-0711 (one-terminal methacryloyloxyalkyl-modified organopolysiloxane, number average molecular weight Mn = 1,000), FM-0721 (one-terminal methacryloyloxyalkyl-modified organopolysiloxane, number average molecular weight Mn = 5,000), and FM-0725 (one-terminal methacryloyloxyalkyl-modified organopolysiloxane, number average molecular weight Mn = 10,000), manufactured by JNC Corporation; and X-22-174ASX (one-terminal methacryloyloxyalkyl-modified organopolysiloxane, functional group equivalent: 900 g/mol), KF-2012 (one-terminal methacryloyloxyalkyl-modified organopolysiloxane, functional group equivalent: 4,600 g/mol), and X-22-2426 (one-terminal methacryloyloxyalkyl-modified organopolysiloxane, functional group equivalent: 12,000 g/mol), manufactured by Shin-Etsu Chemical Co., Ltd.

In addition, as another form of the (co)polymer (A), it is preferable to have a constituent unit derived from a compound (a212) in which n is 0, and p and q are 1 in the formula (II).

The present composition containing the (co)polymer (A) having a constituent unit derived from such a compound (a212) is preferable in that the top coating adhesiveness (for example, adhesiveness of an antifouling coating film formed by the (n + 1)th coating application to an antifouling coating film formed by the n-th coating application when an antifouling coating film is formed by coating application performed two or more times, and adhesiveness between an old antifouling coating film and a new antifouling coating film when an antifouling coating film (new antifouling coating film) is newly formed on an old antifouling coating film after a designed specification period has elapsed) of an antifouling coating film to be formed is improved.

In the compound (a212), m is preferably 3 to 200 and more preferably 5 to 70 from the viewpoint of, for example, ease of polymerization.

As the compound (a212), a commercially available product can be used. Examples of the commercially available product include FM-7711 (both-terminal methacryloyloxyalkyl-modified organopolysiloxane, number average molecular weight Mn = 1,000), FM-7721 (both-terminal methacryloyloxyalkyl-modified organopolysiloxane, number average molecular weight Mn = 5,000), and FM-7725 (both-terminal methacryloyloxyalkyl-modified organopolysiloxane, number average molecular weight Mn = 10,000), manufactured by JNC Corporation; and X-22-164 (both-terminal methacryloyloxyalkyl-modified organopolysiloxane, functional group equivalent: 190 g/mol), X-22-164AS (both-terminal methacryloyloxyalkyl-modified organopolysiloxane, functional group equivalent: 450 g/mol), X-22-164A (both-terminal methacryloyloxyalkyl-modified organopolysiloxane, functional group equivalent: 860 g/mol), X-22-164B (both-terminal methacryloyloxyalkyl-modified organopolysiloxane, functional group equivalent: 1,630 g/mol), X-22-164C (both-terminal methacryloyloxyalkyl-modified organopolysiloxane, functional group equivalent: 2,370 g/mol), X-22-164E (both-terminal methacryloyloxyalkyl-modified organopolysiloxane, functional group equivalent: 3,900 g/mol), and X-22-167B (both-terminal mercaptoalkyl-modified organopolysiloxane, functional group equivalent: 1,670 g/mol), manufactured by Shin-Etsu Chemical Co., Ltd.

Furthermore, as another form of the (co)polymer (A), it is preferable to have a constituent unit derived from a compound (a213) in which n is 1 or more in the formula (II).

The (co)polymer (A) having a constituent unit derived from such a compound (a213) is preferable in that, for example, the viscosity is low and the handling is easy.

In the compound (a213), m is preferably 50 to 1,000, and n is preferably 1 to 30.

As the compound (a213), a commercially available product can be used. Examples of the commercially available product include KF-2001(side chain mercaptoalkyl-modified organopolysiloxane, functional group equivalent: 1,900 g/mol) and KF-2004 (side chain mercaptoalkyl-modified organopolysiloxane, functional group equivalent: 30,000 g/mol) manufactured by Shin-Etsu Chemical Co., Ltd.

When the (co)polymer (A) has a constituent unit derived from the monomer (a21), the content of the constituent unit is preferably 0.5 to 50 mass%, more preferably 1 to 30 mass%, and still more preferably 1.5 to 15 mass% with respect to 100 mass% of all constituent units of the (co)polymer (A) from the viewpoint that, for example, an antifouling coating film excellent in antifouling performance under alternating dry-wet conditions, water resistance, and adhesion to a base can be easily formed.

### · Alkoxyalkyl (meth)acrylate or aryloxyalkyl (meth)acrylate (a22)

The (co)polymer (A) may contain a constituent unit derived from an alkoxyalkyl (meth)acrylate or an aryloxyalkyl (meth)acrylate (a22) (hereinafter also referred to as "monomer (a22)").

When the (co)polymer (A) has a constituent unit derived from the monomer (a22), the constituent unit contained in the (co)polymer (A) may be of one type or two or more types. In addition, it may contain both a constituent unit derived from an alkoxyalkyl (meth)acrylate and a constituent unit derived from an aryloxyalkyl (meth)acrylate.

The monomer (a22) preferably contains a compound represented by a formula (V) below.

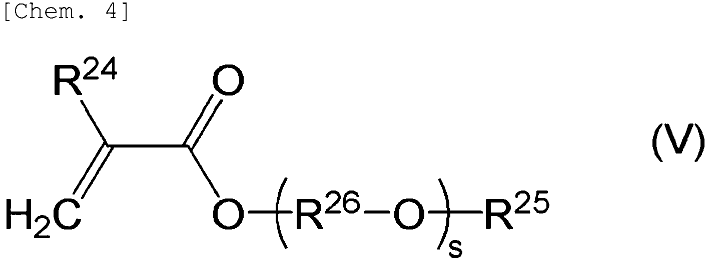

In the formula (V), R²⁴ represents a hydrogen atom or a methyl group, R²⁵ represents a monovalent hydrocarbon group, R²⁶ represents a divalent hydrocarbon group, and s represents an integer of 1 to 30.

In the formula (V), R²⁴ represents a hydrogen atom or a methyl group, and is preferably a hydrogen atom from the viewpoint of, for example, ease of polymerization, and is preferably a methyl group from the viewpoint of, for example, water resistance of an antifouling coating film to be formed.

Specific examples of R²⁵ include an alkyl group and an aryl group.

The monovalent hydrocarbon group in R²⁵ is preferably a linear or branched alkyl group having 1 to 6 carbon atoms or an aryl group, more preferably a linear alkyl group having 1 to 6 carbon atoms, still more preferably an alkyl group having 1 to 4 carbon atoms (for example, a methyl group, an ethyl group, a propyl group, and a butyl group), and particularly preferably a methyl group, from the viewpoint of, for example, the stability of the present composition to be obtained, and the physical properties of the antifouling coating film to be formed.

Specific examples of R²⁶ include an alkylene group.

The alkylene group is preferably an alkylene group having 2 to 6 carbon atoms, more preferably an alkylene group having 2 to 4 carbon atoms, still more preferably an ethylene group or a propylene group, and particularly preferably an ethylene group.

s in the formula (V) is preferably an integer of 1 to 15, more preferably an integer of 1 to 6, and still more preferably 1.

When the (co)polymer (A) having a constituent unit derived from the monomer (a22) in which s is in the above range is used, an antifouling coating film having moderate hydrophilicity and excellent water resistance can be easily formed.

Examples of the monomer (a22) include 2-methoxyethyl (meth)acrylate, 2-ethoxyethyl (meth)acrylate, 4-methoxybutyl (meth)acrylate, 3-methoxy-n-propyl (meth)acrylate, 2-propoxyethyl (meth)acrylate, 2-butoxyethyl (meth)acrylate, isobutoxybutyl diglycol (meth)acrylate, 2-phenoxyethyl (meth)acrylate, methoxy polyethylene glycol (meth)acrylate, ethoxy polyethylene glycol (meth)acrylate, butoxy polyethylene glycol (meth)acrylate, and phenoxy polyethylene glycol (meth)acrylate. Among them, 2-methoxyethyl (meth)acrylate is preferable, and 2-methoxyethyl methacrylate is more preferable.

When the (co)polymer (A) has a constituent unit derived from the monomer (a22), the content of the constituent unit is preferably 5 to 40 mass%, more preferably 10 to 35 mass%, and still more preferably 15 to 30 mass% with respect to 100 mass% of all constituent units of the (co)polymer (A) from the viewpoint that, for example, an antifouling coating film excellent in antifouling performance, water resistance, and hardness can be easily formed.

### · Alkyl (meth)acrylate or aryl(meth)acrylate (a23)

The (co)polymer (A) may contain a constituent unit derived from an alkyl (meth)acrylate or an aryl (meth)acrylate (a23) (hereinafter also referred to as "monomer (a23)").

When the (co)polymer (A) has a constituent unit derived from the monomer (a23), the constituent unit contained in the (co)polymer (A) may be of one type or two or more types. In addition, it may contain both a constituent unit derived from an alkyl (meth)acrylate and a constituent unit derived from an aryl (meth)acrylate.

The alkyl group in the monomer (a23) may be linear, branched, or cyclic, and preferable examples thereof include an alkyl group having 1 to 18 carbon atoms, more preferably 1 to 8 carbon atoms, and still more preferably 1 to 4 carbon atoms, and preferable examples of the aryl group include an aryl group having 6 to 14 carbon atoms and more preferably 6 to 10 carbon atoms.

Examples of the monomer (a23) include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, sec-butyl (meth)acrylate, pentyl (meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth)acrylate, phenyl (meth)acrylate, and benzyl (meth)acrylate. Among them, methyl methacrylate is preferable from the viewpoint that, for example, an antifouling coating film excellent in coating film strength and excellent in antifouling performance can be easily formed, and butyl acrylate is preferable from the viewpoint that, for example, an antifouling coating film excellent in water resistance and crack resistance can be easily formed. It is also preferable to use methyl methacrylate and butyl acrylate in combination.

When the (co)polymer (A) has a constituent unit derived from the monomer (a23), the content of the constituent unit is preferably 0.2 to 40 mass%, more preferably 1 to 35 mass%, still more preferably 3 to 30 mass%, even more preferably 5 to 25 mass%, and particularly preferably 8 to 25 mass% with respect to 100 mass% of all constituent units of the (co)polymer (A).

When the (co)polymer (A) has a constituent unit derived from methyl methacrylate, the content of the constituent unit is preferably 0.5 to 40 mass%, more preferably 1 to 35 mass%, and still more preferably 3 to 30 mass% with respect to 100 mass% of all constituent units of the (co)polymer (A).

When the (co)polymer (A) has a constituent unit derived from butyl acrylate, the content of the constituent unit is preferably 0.2 to 20 mass%, more preferably 1 to 15 mass%, and still more preferably 3 to 10 mass% with respect to 100 mass% of all constituent units of the (co)polymer (A).

### · Hydroxyalkyl (meth)acrylate (a24)

The (co)polymer (A) may contain a constituent unit derived from hydroxyalkyl (meth)acrylate (a24) (hereinafter also referred to as "monomer (a24)").

When the (co)polymer (A) has a constituent unit derived from the monomer (a24), the constituent unit contained in the (co)polymer (A) may be of one type or two or more types.

Examples of the monomer (a24) include hydroxymethyl (meth)acrylate, 2-hydroxyethyl (meth)acrylate, 2-hydroxypropyl (meth)acrylate, 4-hydroxybutyl (meth)acrylate, and 2-hydroxy-3-phenoxypropyl (meth)acrylate.

When the (co)polymer (A) has a constituent unit derived from the monomer (a24), the content of the constituent unit is preferably 0.5 to 30 mass%, more preferably 1 to 20 mass%, and still more preferably 2 to 15 mass% with respect to 100 mass% of all constituent units of the (co)polymer (A).

### · Glycidyl (meth)acrylate (a25)

The (co)polymer (A) may contain a constituent unit derived from glycidyl (meth)acrylate (a25) (hereinafter also referred to as "monomer (a25)").

When the (co)polymer (A) has a constituent unit derived from the monomer (a25), the constituent unit contained in the (co)polymer (A) may be of one type or two or more types.

When the (co)polymer (A) has a constituent unit derived from the monomer (a25), the content of the constituent unit is preferably 0.5 to 30 mass%, more preferably 1 to 20 mass%, and still more preferably 2 to 15 mass% with respect to 100 mass% of all constituent units of the (co)polymer (A).

### · Unsaturated carboxylic acid compound (a26)

The (co)polymer (A) may contain a constituent unit derived from an unsaturated carboxylic acid compound (a26) (hereinafter also referred to as "monomer (a26)").

When the (co)polymer (A) has a constituent unit derived from the monomer (a26), the constituent unit contained in the (co)polymer (A) may be of one type or two or more types.

The monomer (a26) is a monomer having a carboxy group or an acid anhydride group in the molecule.

Examples of the monomer (a26) include (meth)acrylic acid, (meth)acryloyloxyalkyl succinic acid, (meth)acryloyloxyalkyl phthalic acid, (meth)acryloyloxyalkyl hexahydrophthalic acid, itaconic acid, maleic acid, maleic anhydride, itaconic acid, crotonic acid, and 6-acrylamidohexanoic acid. Among them, (meth)acrylic acid is preferable from the viewpoint of, for example, the handleability and availability of the compound, and the viscosity of the (co)polymer (A) to be obtained.

When the (co)polymer (A) has a constituent unit derived from the monomer (a26), the content of the constituent unit is preferably 0.01 to 20 mass% and more preferably 0.1 to 10 mass% with respect to 100 mass% of all constituent units of the (co)polymer (A).

### · Metal ester group-containing unsaturated monomer (a27)

The (co)polymer (A) may contain a constituent unit derived from a metal ester group-containing unsaturated monomer (a27) (hereinafter also referred to as "monomer (a27)").

When the (co)polymer (A) has a constituent unit derived from the monomer (a27), the constituent unit contained in the (co)polymer (A) may be of one type or two or more types.

Specific examples of the monomer (a27) include a monomer having a metal ester group formed by bonding a metal and a carboxylic acid.

Examples of the metal constituting the metal ester group include magnesium, calcium, neodymium, titanium, zirconium, iron, ruthenium, cobalt, nickel, copper, zinc, and aluminum.

The metal ester group is preferably a polyvalent metal ester group, and more preferably a divalent metal ester group represented by a formula (VI) below.

Specific examples of the "polyvalent metal ester group" and the "divalent metal ester group" include a group formed by bonding a polyvalent metal or a divalent metal to a carboxylic acid.

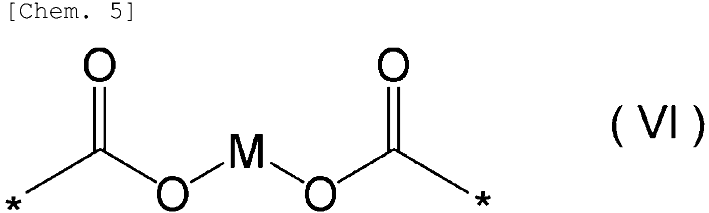

In the formula (VI), M represents a metal, and * represents a bonding position.

In the formula (VI), M is a divalent metal, and examples thereof include a divalent metal among the metals described above. Among them, metals of groups 10 to 12 in the periodic table such as nickel, copper, and zinc are preferable, more preferably, it is selected from the group consisting of copper and zinc, and still more preferably zinc.

Examples of the monomer (a27) include zinc di(meth)acrylate, copper di(meth)acrylate, zinc acrylate(methacrylate), copper acrylate(methacrylate), zinc di(3-(meth)acryloyloxypropionate), copper di(3-(meth)acryloyloxypropionate), zinc (meth)acrylate(naphthenate), and copper (meth)acrylate(naphthenate).

When the (co)polymer (A) has a constituent unit derived from the monomer (a27), the content of the constituent unit is preferably 0.5 to 30 mass%, more preferably 1 to 20 mass%, and still more preferably 2 to 15 mass% with respect to 100 mass% of all constituent units of the (co)polymer (A).

### · Another vinyl compound (a28)

The (co)polymer (A) may contain a constituent unit derived from another vinyl compound (a28) (hereinafter also referred to as "monomer (a28)").

When the (co)polymer (A) has a constituent unit derived from the monomer (a28), the constituent unit contained in the (co)polymer (A) may be of one type or two or more types.

Examples of the monomer (a28) include styrene, α-methylstyrene, vinyl acetate, vinyl benzoate, vinyl toluene, acrylonitrile, methacrylonitrile, vinyl pyridine, vinyl pyrrolidone, and vinyl chloride.

When the (co)polymer (A) has a constituent unit derived from the monomer (a28), the content of the constituent unit is preferably 0.1 to 30 mass% and more preferably 0.5 to 10 mass% with respect to 100 mass% of all constituent units of the (co)polymer (A).

### [Method for synthesizing (co)polymer (A)]

The (co)polymer (A) can be synthesized, for example, by the following procedure.

A reaction vessel equipped with a stirrer, a condenser, a thermometer, a dropping device, a nitrogen introduction tube, and a heating and cooling jacket is charged with a solvent, and heated and stirred under a nitrogen stream at a temperature condition of 80 to 90°C, and while the same temperature is maintained, a mixed liquid containing, for example, the monomers to be reaction raw materials of the (co)polymer (A), a polymerization initiator, a chain transfer agent, and a solvent is dropped from the dropping device, and a polymerization reaction is performed to synthesize the (co)polymer (A).

The polymerization initiator is not particularly limited, and various radical polymerization initiators can be used. Specific examples thereof include peroxides such as benzoyl peroxide, hydrogen peroxide, cumene hydroperoxide, tert-butyl hydroperoxide, potassium persulfate, sodium persulfate, and tert-butyl peroctoate [TBPO]; and azo compounds such as 2,2'-azobis(isobutyronitrile) [AIBN], 2,2'-azobis(2-methylbutyronitrile) [AMBN], 2,2'-azobis(2,4-dimethylvaleronitrile) [ADVN], and 4,4'-azobis-4-cyanovaleric acid.

As the polymerization initiator, one type may be used or two or more types may be used.

The polymerization initiator may be added into a reaction system only at the start of a reaction, or may be added into the reaction system both at the start of the reaction and during the reaction.

When the polymerization initiator is used in the production of the (co)polymer (A), the use amount thereof is preferably 0.1 to 20 parts by mass, and more preferably 0.5 to 5 parts by mass with respect to 100 parts by mass in total of the monomers.

The chain transfer agent is not particularly limited, and for example, α-methylstyrene dimer; thioglycolic acid; diterpene; terpinolene; γ-terpinene; mercaptans such as tert-dodecyl mercaptan and n-dodecyl mercaptan; halides such as carbon tetrachloride, methylene chloride, bromoform, and bromotrichloroethane; and secondary alcohols such as isopropanol and glycerin.

As the chain transfer agent, one type may be used or two or more types may be used.

When the chain transfer agent is used in the production of the (co)polymer (A), the use amount thereof is preferably 0.1 to 5 parts by mass with respect to 100 parts by mass in total of the monomers.

Examples of the solvent include aromatic hydrocarbon solvents such as toluene, xylene, and mesitylene; alcohol solvents such as propanol, butanol, propylene glycol monomethyl ether, and dipropylene glycol monomethyl ether; ketone solvents such as methyl ethyl ketone, methyl isobutyl ketone, and methyl amyl ketone; ester solvents such as ethyl acetate and butyl acetate; and water.

### <Rosin compound (B)>

The rosin compound (rosin-based compound) (B) contains a rosin compound monomer (rosin-based compound monomer) (B1) and a rosin compound multimer (rosin-based compound multimer) (B2).

Examples of the rosin compound include compounds containing, for example, abietic acid, palustric acid, and/or isopimaric acid as a main component.

The incorporation of the monomer (B1) and the multimer (B2) in the compound (B) can be determined, for example, by observing a plurality of peaks in measurement results measured under the following GPC conditions.

In addition, the content ratio of the monomer (B1) and the multimer (B2) in the compound (B) can be calculated, for example, from the ratio of the peak area of the peak identified as the monomer (B1) and the peak area of the peak identified as the multimer (B2) among a plurality of peaks of measurement results measured under the following GPC conditions.

### GPC conditions

Apparatus: "HLC-8420GPC" (manufactured by Tosoh Corporation)
Column: one "TSKgel guardcolumn SuperH-L" (4.6 mm (inner diameter), 3.5 cm (length) manufactured by Tosoh Corporation), one "TSKgel SuperH2000" (6 mm (inner diameter), 15 cm (length) manufactured by Tosoh Corporation), and two "TSKgel SuperH4000" (6 mm (inner diameter), 15 cm (length) manufactured by Tosoh Corporation)
Eluent: tetrahydrofuran (THF)
Flow rate: 0.600 mL/min
Detector: RI
Column thermostat temperature: 40°C
Standard substance: polystyrene
Sample preparation method: The compound (B) whose concentration was adjusted with THF so that the solid content concentration was 1.5 mass% was filtered through a membrane filter (0.45 µm), and the obtained filtrate was used as a GPC measurement sample.

The total content of the (co)polymer (A) and the compound (B) in the present composition is 5 to 40 mass%, preferably 10 to 35 mass%, more preferably 15 to 30 mass%, and still more preferably 20 to 25 mass% with respect to 100 mass% of the solid content of the present composition.

When the total content is in the above range, it is possible to easily form an antifouling coating film which has a stable coating film consumption degree even under water immersion, particularly under dynamic immersion such as a rotating water flow, and is excellent in durability of the antifouling property.

The content of the compound (B) in the present composition is preferably 0.1 to 2 parts by mass, more preferably 0.13 to 1.5 parts by mass, still more preferably 0.15 to 1 part by mass, and particularly preferably 0.15 to 0.8 parts by mass with respect to 1 part by mass of the content of the (co)polymer (A) in the present composition.

When the content of the compound (B) with respect to the content of the (co)polymer (A) is within the above range, it is possible to easily form an antifouling coating film which has a stable coating film consumption degree even under water immersion, particularly under dynamic immersion such as a rotating water flow, and is excellent in durability of the antifouling property.

The content of the compound (B) in the present composition is preferably 1 to 30 mass%, more preferably 1.5 to 20 mass%, still more preferably 2 to 15 mass%, even more preferably 2.5 to 9 mass%, and particularly preferably 3 to 6 mass% with respect to 100 mass% of the solid content of the present composition.

When the content of the compound (B) is in the above range, it is possible to easily form an antifouling coating film which has excellent wood block resistance, less consumption degree temperature dependence, and a more stable coating film consumption degree.

### [Rosin compound monomer (B1)]

Examples of the rosin compound monomer (B1) include rosin, a rosin derivative, a rosin metal salt, and pine tar, and among these, rosin is preferable from the viewpoint that, for example, the effect of the present composition is more demonstrated.

Examples of the rosin include gum rosin, wood rosin, and tall oil rosin, and gum rosin is preferable.

Examples of the rosin derivative include hydrogenated rosin, disproportionated rosin, maleated rosin, and formylated rosin.

Examples of the rosin metal salt include zinc rosinate, calcium rosinate, copper rosinate, magnesium rosinate, and a reaction product of another metal compound and rosin.

The monomer (B1) used in the present composition may be of one type or two or more types.

The content of the monomer (B1) in the present composition is preferably 0.5 to 25 mass%, more preferably 1 to 17 mass%, still more preferably 1.5 to 13 mass%, even more preferably 2 to 8 mass%, and particularly preferably 2.5 to 5 mass% with respect to 100 mass% of the solid content of the present composition.

When the content of the monomer (B1) is within the above range, an antifouling coating film having a high antifouling property (adhesion suppressing property) against aquatic organisms can be easily formed.

### [Rosin compound multimer (B2)]

The rosin compound multimer (B2) is a multimer of the monomer (B1). The multimer is preferably a dimer.

The multimer (B2) can be obtained by, for example, polymerizing (for example, dimerizing) the monomer (B1) by a method described in JP 2002-201433 A.

The multimer (B2) used in the present composition may be of one type or two or more types.

The content of the multimer (B2) in the present composition is 0.07 to 5 parts by mass, more preferably 0.1 to 3 parts by mass, and still more preferably 0.12 to 1 part by mass with respect to 1 part by mass of the content of the monomer (B1) in the present composition.

When the content of the multimer (B2) with respect to the content of the monomer (B1) is in the above range, it is possible to easily form an antifouling coating film which has less consumption degree temperature dependence and has a more stable coating film consumption degree, and it is possible to easily form an antifouling coating film which has a stable coating film consumption degree even under water immersion, particularly under dynamic immersion such as a rotating water flow, and is excellent in durability of the antifouling property.

The content of the multimer (B2) in the present composition is preferably 0.01 to 1 part by mass, more preferably 0.02 to 0.5 parts by mass, and still more preferably 0.02 to 0.3 parts by mass with respect to 1 part by mass of the content of the (co)polymer (A) in the present composition.

When the content of the multimer (B2) with respect to the content of the (co)polymer (A) is in the above range, an antifouling coating film which has less consumption degree temperature dependence can be easily formed.

The content of the multimer (B2) in the present composition is preferably 0.05 to 10 mass%, more preferably 0.1 to 5 mass%, still more preferably 0.15 to 3 mass%, even more preferably 0.2 to 2 mass%, and particularly preferably 0.25 to 1.5 mass% with respect to 100 mass% of the solid content of the present composition.

When the content of the multimer (B2) with respect to the solid content of the present composition is within the above range, it is possible to easily form an antifouling coating film which has a stable coating film consumption degree even under water immersion, particularly under dynamic immersion such as a rotating water flow, and is excellent in durability of the antifouling property.

### <Antifouling agent (C)>

In order to improve the antifouling property of the antifouling coating film formed from the present composition, the present composition preferably further contains an antifouling agent (C).

The antifouling agent (C) used in the present composition may be of one type or two or more types.

The content of the antifouling agent (C) in the present composition is preferably 30 to 80 mass%, and more preferably 40 to 70 mass% with respect to 100 mass% of the solid content of the present composition from the viewpoint that, for example, an antifouling coating film having a sufficient antifouling property can be easily formed.

Examples of the antifouling agent (C) include (+/-)-4-[1-(2,3-dimethylphenyl)ethyl]-1H-imidazole (also known as medetomidine);
4-bromo-2-(4-chlorophenyl)-5-(trifluoromethyl)-1H-pyrrole-3-carbonitrile (also known as tralopyril);
metal pyrithione compounds such as copper pyrithione and zinc pyrithione;
4,5-dichloro-2-n-octyl-4-isothiazoline-3-one (also known as DCOIT);
borane-nitrogen base adducts such as pyridine triphenylborane and 4-isopropylpyridine(N-B)methyl(diphenyl)borane;
N,N-dimethyl-N'-(3,4-dichlorophenyl)urea;
maleimide compounds such as N-(2,4,6-trichlorophenyl)maleimide, 2,3-dichloro-N-(2',6'-diethylphenyl)maleimide, and 2,3-dichloro-N-(2'-ethyl-6'-methylphenyl)maleimide;
2-methylthio-4-tert-butylamino-6-cyclopropylamino-1,3,5-triazine;
2,4,5,6-tetrachloroisophthalonitrile;
carbamate compounds such as bisdimethyldithiocarbamoyl zinc ethylene bisdithiocarbamate, zinc dimethyldithiocarbamate, and zinc etylene bisdithiocarbamate;
disulfide compounds such as chloromethyl-n-octyl disulfide and tetraalkylthiuram disulfide;
N',N'-dimethyl-N-phenyl-(N-fluorodichloromethylthio)sulfamide;
and copper compounds such as cuprous oxide, copper oxide, copper (metal copper), and copper thiocyanate (also known as copper rhodanide).

Among them, the antifouling agent (C) preferably contains at least one selected from medetomidine, tralopyril, DCOIT, a metal pyrithione compound (for example, copper pyrithione or zinc pyrithione), and a copper compound (for example, cuprous oxide or copper rhodanide), more preferably contains at least one selected from a metal pyrithione compound and cuprous oxide, and particularly preferably contains a metal pyrithione compound and cuprous oxide from the viewpoint that, for example, an antifouling coating film having a high antifouling property (adhesion suppressing property) against aquatic organisms can be easily formed.

Although medetomidine has optical isomerism, when medetomidine is used in the present composition, only one optical isomer thereof may be used, or a mixture of optical isomers in an arbitrary ratio may be used.

As the medetomidine, an imidazolium salt of medetomidine or an adduct of medetomidine to, for example, a metal may be used. In this case, as a raw material in preparing the present composition, an imidazolium salt or an adduct to, for example, a metal may be used, or an imidazolium salt or an adduct to, for example, a metal may be formed in the present composition or an antifouling coating film.

### . Cuprous oxide

The cuprous oxide is preferably in the form of particles having a median diameter (D50) of about 0.1 to 30 µm from the viewpoint that, for example, an antifouling coating film having an antifouling property for a long period of time can be easily formed.

As the cuprous oxide, cuprous oxide surface-treated with glycerin, stearic acid, lauric acid, sucrose, lecithin, or mineral oil is preferable in that, for example, the present composition excellent in long-term stability during storage can be easily obtained.

When the present composition contains cuprous oxide, the content thereof is preferably 30 to 80 mass% and more preferably 40 to 70 mass% with respect to 100 mass% of the solid content of the present composition from the viewpoint that, for example, an antifouling coating film having a sufficient antifouling property can be easily formed.

### · Metal pyrithione compound

As the metal pyrithione compound, copper pyrithione and zinc pyrithione are preferable, and copper pyrithione is preferable from the viewpoint that, for example, an antifouling coating film excellent in water resistance, crack resistance, and antifouling property can be easily formed.

When the present composition contains a metal pyrithione, the content thereof is preferably 0.3 to 20 mass% and more preferably 0.5 to 15 mass% with respect to 100 mass% of the solid content of the present composition from the viewpoint that, for example, an antifouling coating film having a sufficient antifouling property can be easily formed.

### <Other optional components>

The present composition may contain other optional components other than the (co)polymer (A), the compound (B), and the antifouling agent (C) as necessary.

Examples of the other optional components include a pigment (D), a solvent (E), a plasticizer (F), an anti-sagging agent/anti-settling agent (G), a dehydrating agent (H), another binder component (I), a monocarboxylic acid compound, a polybasic acid, an antifoaming agent, and a wet dispersant.

When other optional components are used in the present composition, each of the other optional components to be used may be of one type or two or more types.

### [Pigment (D)]

The pigment (D) is not particularly limited, and conventionally known pigments can be used.

Examples of the pigment (D) include a flaky pigment (D1), a zinc oxide (D2), and other pigments (D3).

The pigment (D) used in the present composition may be of one type or two or more types.

When the present composition contains the pigment (D), the content thereof is preferably 1 to 50 mass%, more preferably 5 to 40 mass%, and still more preferably 10 to 30 mass% with respect to 100 mass% of the solid content of the present composition.

When the content of the pigment (D) is in the above range, a composition more excellent in coating application workability can be easily formed, and an antifouling coating film more excellent in adhesion to a substrate due to stress relief can be easily formed.

### [Flaky pigment (D1)]

When the flaky pigment (D1) is used in the present composition, there is a tendency that a crack that can occur in the antifouling coating film to be formed can be suppressed, and an antifouling coating film in which internal stress is relieved can be easily formed.

When the flaky pigment (D1) is used in the present composition, the flaky pigment (D1) to be used may be of one type or two or more types.

Examples of the flaky pigment (D1) include talc, mica, glass flakes, aluminum flakes, scaly iron oxide, stainless flakes, and plastic flakes, and among these, talc and mica are preferable, and talc is more preferable from the viewpoint that, for example, the crack can be further suppressed.

The median diameter (D50) of the flaky pigment (D1) is preferably 5 to 200 µm.

The average aspect ratio (median diameter/average thickness) of the flaky pigment (D1) is preferably 3 to 150, and more preferably 5 to 100.

In the present description, D50 can be measured using a laser scattering diffraction particle size distribution analyzer, for example, "SALD 2200" (manufactured by Shimadzu Corporation).

The average thickness can be calculated as an average value of thicknesses of several tens to several hundreds of pigment particles by observation from a horizontal direction with respect to the main surface of the flaky pigment (D1) using a scanning electron microscope (SEM), for example, "XL-30" (manufactured by Philips).

When the present composition contains the flaky pigment (D1), the content thereof is preferably 1 to 20 mass%, and more preferably 3 to 10 mass% with respect to 100 mass% of the solid content of the present composition from the viewpoint that, for example, an antifouling coating film more excellent in the above effect can be easily formed.

### [Zinc oxide (D2)]

When zinc oxide (D2) is used in the present composition, there is a tendency that an antifouling coating film which has a sufficient antifouling property and is excellent in water resistance can be easily formed.

The shape, median diameter (D50), and others of zinc oxide (D2) are not particularly limited, and when zinc oxide (D2) is used in the present composition, two or more types of zinc oxide (D2) having different shapes, D50, and others may be used.

The D50 of zinc oxide (D2) is preferably 0.01 µm or more, more preferably 0.05 µm or more, particularly preferably 0.1 µm or more, and preferably 10 µm or less, more preferably 5 µm or less from the viewpoint that zinc oxide (D2) is easily dispersed well in the present composition and from the viewpoint that the antifouling property of an antifouling coating film to be obtained is improved.

When the present composition contains zinc oxide (D2), the content thereof is preferably 1 to 30 mass% and more preferably 5 to 20 mass% with respect to 100 mass% of the solid content of the present composition from the viewpoint that, for example, an antifouling coating film more excellent in the above effect can be easily formed.

### [Another pigment (D3)]

The present composition may contain another pigment (D3) other than the flaky pigment (D1) and the zinc oxide (D2) for the purpose of, for example, coloring the antifouling coating film and concealing the base, and for the purpose of adjusting the antifouling coating film strength to an appropriate level.

When another pigment (D3) is used in the present composition, the another pigment (D3) to be used may be of one type or two or more types.

Examples of the another pigment (D3) include extender pigments such as silica, zinc phosphate, clay, potassium feldspar, calcium carbonate, kaolin, alumina white, white carbon, aluminum hydroxide, magnesium carbonate, barium carbonate, barium sulfate, calcium sulfate, and zinc sulfide; and color pigments such as Bengara (red iron oxide), titanium white (titanium oxide), yellow iron oxide, carbon black, naphthol red, and phthalocyanine blue.

When the present composition contains another pigment (D3), the total content thereof may be appropriately set according to, for example, the colorability/concealability required for the antifouling coating film to be formed, or the viscosity required for the present composition, and is preferably 0.01 to 20 mass%, more preferably 0.1 to 15 mass% with respect to 100 mass% of the solid content of the present composition.

### [Solvent (E)]

The present composition may contain a solvent (E) such as water or an organic solvent as necessary for the purpose of, for example, adjusting the viscosity of the composition. The solvent (E) is preferably an organic solvent, and is preferably substantially free of water. That is, the present composition is preferably not an aqueous composition but an organic solvent type composition.

Here, the expression "substantially free of water" means that the proportion of water in the solvent (E) is 10 mass% or less, and preferably 2 mass% or less.

When the solvent (E) is used in the present composition, the solvent (E) to be used may be of one type or two or more types.

Examples of the organic solvent include aromatic organic solvents such as xylene, toluene, and ethylbenzene; ketones such as methyl ethyl ketone, methyl isobutyl ketone, and cyclohexanone; aliphatic (number of carbon atoms: 1 to 10, preferably about 2 to 5) monohydric alcohols such as ethanol, isopropyl alcohol, n-butanol, isobutanol, and propylene glycol monomethyl ether; ester solvents such as ethyl acetate and butyl acetate.

The content of the solvent (E) in the present composition may be 0 mass%, but when the present composition contains the solvent (E), the content thereof is preferably appropriately set so as to achieve a desired viscosity according to the coating application method of the present composition, and is usually preferably 10 to 50 mass%, and more preferably 15 to 40 mass% with respect to 100 mass% of the present composition. When the content of the solvent (E) is too large, a problem such as deterioration of the anti-sagging property may occur.

### [Plasticizer (F)]

The present composition may contain a plasticizer (F) for the purpose of, for example, imparting plasticity to the antifouling coating film to be formed.

When the plasticizer (F) is used in the present composition, the plasticizer (F) to be used may be of one type or two or more types.

Examples of the plasticizer (F) include tricresyl phosphate (TCP), dioctyl phthalate (DOP), diisodecyl phthalate (DIDP), adipic acid diester, and acetyl tributyl citrate.

When the present composition contains the plasticizer (F), the content thereof is preferably 0.1 to 10 mass% and more preferably 0.5 to 5 mass% with respect to 100 mass% of the solid content of the present composition from the viewpoint that, for example, the plasticity of the antifouling coating film to be formed can be well maintained.

### [Anti-sagging agent/anti-settling agent (G)]

The present composition may contain an anti-sagging agent/anti-settling agent (G) for the purpose of, for example, adjusting the viscosity of the composition.

When the anti-sagging agent/anti-settling agent (G) is used in the present composition, the anti-sagging agent/antisettling agent (G) to be used may be of one type or two or more types.

Examples of the anti-sagging agent/anti-settling agent (G) include organic clay waxes (for example, stearate salts, lecithin salts, and alkyl sulfonate salts of Al, Ca or Zn), organic waxes (for example, polyethylene wax, oxidized polyethylene wax, amide wax, polyamide wax, and hydrogenated castor oil wax), mixtures of an organic clay wax and an organic wax, and synthetic fine silica.

When the present composition contains the anti-sagging agent/anti-settling agent (G), the content thereof is preferably 0.01 to 10 mass%, and more preferably 0.1 to 3 mass% with respect to 100 mass% of the solid content of the present composition.

### [Dehydrating agent (H)]

The present composition may contain a dehydrating agent (H) for the purpose of, for example, improving the storage stability thereof.

When the dehydrating agent (H) is used in the present composition, the dehydrating agent (H) to be used may be of one type or two or more types.

Examples of the dehydrating agent (H) include, as inorganic dehydrating agents, synthetic zeolite, anhydrite, and gypsum hemihydrate (also known as calcined gypsum), and, as organic dehydrating agents, alkoxysilanes such as tetramethoxysilane, tetraethoxysilane (ethyl silicate), tetrapropoxysilane, tetrabutoxysilane, tetraphenoxysilane, methyltriethoxysilane, dimethyldiethoxysilane, and trimethylethoxysilane or condensates thereof, and alkyl orthoformates such as methyl orthoformate and ethyl orthoformate.

When the present composition contains the dehydrating agent (H), the content thereof is preferably 0.1 to 20 mass% and more preferably 0.2 to 15 mass% with respect to 100 mass% of the solid content of the present composition.

### [Another binder component (I)]

The present composition may contain another binder component (I) other than the (co)polymer (A) for the purpose of, for example, imparting a static antifouling property, water resistance, crack resistance, and strength to an antifouling coating film to be formed.

When the another binder component (I) is used in the present composition, the another binder component (I) to be used may be of one type or two or more types.

Examples of the another binder component (I) include a (meth)acrylic (co)polymer ((meth)acrylic resin), a vinyl polymer, chlorinated paraffin, n-paraffin, terpene phenol, and polyvinyl ethyl ether.

Examples of the acrylic (co)polymer include (co)polymers obtained by polymerizing one or two or more selected from the other monomers (a21) to (a26) and the monomer (a28) in the section of the (co)polymer (A), and it is preferable to contain a constituent unit derived from the monomer (a22) from the viewpoint of, for example, a static antifouling property.

As the another binder component (I), a commercially available product may be used, and examples of the commercially available product include "DIANAL BR-106" ((meth)acrylic (co)polymer) manufactured by Mitsubishi Chemical Corporation, "Toyoparax A-40/A-50/A-70/A-145/A-150" (chlorinated paraffin) manufactured by Tosoh Corporation.

When the present composition contains another binder component (I), the content thereof is preferably 1 to 30 mass% with respect to 100 mass% of the solid content of the present composition.

### <Method for preparing present composition>

The present composition can be prepared by a method similar to a known method for preparing a general antifouling coating composition.

Specifically, it can be prepared by synthesizing the (co)polymer (A), then adding (a solution of) the obtained (co)polymer (A), the compound (B), the antifouling agent (C), and if necessary, the other optional components all at once or sequentially to a container, followed by stirring and mixing.

### <<Antifouling coating film, substrate with antifouling coating film, method for producing same, and antifouling method for substrate>>

The antifouling coating film according to an embodiment of the present invention (hereinafter also referred to as "present coating film") is formed from the present composition, and can be usually formed by drying the present composition. The present coating film is usually formed on a substrate, and is used as a substrate with the present coating film having a substrate and the present coating film.

Preferable examples of the method for producing a substrate with the present coating film include a method including a step of providing the present composition on at least a part of a substrate, followed by drying.

The antifouling method for a substrate according to an embodiment of the present invention includes a step of forming the present coating film on at least a part of a substrate. The method for producing a substrate with a present coating film includes a step of forming the present coating film on at least a part of a substrate, and therefore can be said to be an antifouling method for a substrate.

The substrate is not particularly limited, but the present composition is preferably used for, for example, antifouling of the substrate in a wide range of industrial fields such as ships, fishery, and underwater structures, and thus examples of the substrate include ships (for example, hull outer plates of, for example, large steel ships such as container ships and tankers, fishing ships, FRP ships, wooden ships, and yachts, including both newly built ships and repaired ships); fishery materials (for example, rope, fishing net, fishing gear, float, and buoy); diver suit; swimming goggles; oxygen cylinders; swimsuits; torpedoes; and submerged structures such as structures including, for example, oil pipelines, water conduit pipes, circulating water pipes, and water supply/discharge ports of thermal and nuclear power plants, submarine cables, sea water utilization equipment (for example, sea water pumps), megafloats, coastal roads, submarine tunnels, harbor facilities, and various structures for underwater civil engineering works in, for example, canals and water channels. Among these, a ship, an underwater structure, and a fishing material are preferable, a ship and an underwater structure are more preferable, and a ship is particularly preferable.

The substrate may be a substrate treated with another treatment agent such as a rust inhibitor, a substrate having a coating film such as a primer formed on a surface thereof, or a substrate having the present coating film formed thereon. The object with which the present coating film is in direct contact is not particularly limited.

The method of providing the present composition on at least a part of a substrate is not particularly limited, and examples thereof include a method of applying the present composition to a substrate and a method of immersing a substrate in the present composition (impregnating a substrate with the present composition).

Examples of the application method include known methods such as a method using a brush, a roller, and a spray.

Examples of the drying method include a method of leaving the resultant at ambient temperature (for example, 25°C) for preferably about 0.5 to 14 days, and more preferably about 1 to 7 days. The drying may be performed under heating or may be performed while blowing air.

The thickness of the present coating film after drying may be arbitrarily selected according to, for example, the coating film consumption degree of the present coating film, or the application and period of use of the present coating film, and is preferably, for example, about 30 to 1,000 µm. Examples of the method for forming an antifouling coating film having this thickness include a method in which the present composition is applied one or more times such that a dry coating film having a thickness of preferably 10 to 300 µm, more preferably 30 to 200 µm is obtained per coating application.

The substrate with the present coating film can also be produced by a method including a step (I) of forming the present coating film and a step (II) of attaching the obtained present coating film to a substrate.

The step (I) is not particularly limited, and examples thereof include a method in which a support subjected to a release treatment is used as necessary instead of the substrate in the method of providing the present composition on at least a part of the substrate.

The step (II) is also not particularly limited, and examples thereof include a method described in JP 2013-129724 A.

### Examples

Hereinafter, an embodiment of the present invention will be described more specifically with reference to examples, but the present invention is not limited by the examples at all.

The "solid content" of each component used in examples means a component obtained by removing a volatile component contained as a solvent in each component, and one obtained by drying each component in a hot air dryer at 105°C for 1 hour is defined as a solid content.

### <Production Example 1: Production of silyl ester copolymer solution (A-1)>

All the following reaction steps were performed under a nitrogen stream.

A reaction vessel equipped with a stirrer, a condenser, a thermometer, a dropping device, a nitrogen inlet tube, and a heating and cooling jacket was charged with 53.85 parts by mass of xylene, and heated to 80 ± 3°C with stirring. While the same temperature was maintained, a raw material mixture including a monomer mixture containing 50.0 parts by mass of triisopropylsilyl methacrylate, 28.0 parts by mass of 2-methoxyethyl methacrylate, 14.0 parts by mass of methyl methacrylate, and 8.0 parts by mass of butyl acrylate, and 1.3 parts by mass of 2,2'-azobisisobutyronitrile, which was a charge initiator, was dropped into the reaction vessel from the dropping device over 2 hours. Thereafter, the mixture was stirred at the same temperature for 1 hour, then stirred at 85°C for 1 hour, and then heated to 105°C over 3 hours while 0.4 parts by mass of 2,2'-azobisisobutyronitrile was added in 4 portions. To the reaction solution obtained after heating, 12.81 parts by mass of xylene was added to produce a pale yellow transparent silyl ester copolymer solution (A-1).

### <Production Examples 2 to 4: Production of silyl ester copolymer solutions (A-2) to (A-4)>

Silyl ester copolymer solutions (A-2) to (A-4) were produced in the same manner as in Production Example 1 except that the types and the charging ratio of the raw material mixture used in Production Example 1 were changed as shown in Table 1.

"FM-0711" in Table 1 is one-terminal methacryloyloxyalkyl-modified organopolysiloxane (Mn = 1,000) manufactured by JNC Corporation.

### <Viscosity of copolymer solution>

The viscosity of the produced copolymer solution at 25°C and a rotation speed of 10 rpm was measured using an E-type viscometer (manufactured by Toki Sangyo Co., Ltd.). The results are shown in Table 1.

### <Number average molecular weight (Mn) and weight average molecular weight (Mw) of copolymer>

Mn and Mw of the copolymer in the produced copolymer solution were measured under the following conditions using gel permeation chromatography (GPC). The results are shown in Table 1.

### · GPC conditions

Apparatus: "HLC-8320GPC" (manufactured by Tosoh Corporation)
Column: "TSKgel guardcolumn SuperMP(HZ)-M" + "TSKgel SuperMultiporeHZ-M" + "TSKgel SuperMultiporeHZ-M" (all manufactured by Tosoh Corporation)
Eluent: tetrahydrofuran (THF)
Flow rate: 0.35 mL/min
Detector: RI
Column thermostat temperature: 40°C
Standard substance: polystyrene
Sample preparation method: the polymer solution prepared in each production example was diluted by adding THF, and a filtrate obtained by filtration through a membrane filter was used as a GPC measurement sample.

**[Table 1]**

| | | Production Example | | | |
|---|---|---|---|---|---|
| | | 1 | 2 | 3 | 4 |
| | | (A-1) | (A-2) | (A-3) | (A-4) |
| Monomer mixture | Triisopropylsilyl methacrylate | 50.0 | 60.0 | 50.0 | 70.0 |
| | FM-0711 | | | 10.0 | |
| | 2-Methoxyethyl methacrylate | 28.0 | 25.0 | 20.0 | 20.0 |
| | Methyl methacrylate | 14.0 | 10.0 | 20.0 | 2.5 |
| | Butyl acrylate | 8.0 | 5.0 | | 7.5 |
| Charge initiator | 2,2'-Azobis(isobutyronitrile) | 1.3 | 0.6 | 1.1 | 0.3 |
| | 2,2'-Azobis(2-methylbutyronitrile) | | | | 3.3 |
| Physical properties | Solid content (mass%) | 60.6 | 60.5 | 59.2 | 59.9 |
| | Viscosity (mPa·s/25°C) | 1,765 | 1,415 | 1,839 | 1,029 |
| | Mn | 9,358 | 7,852 | 7,900 | 10,366 |
| | Mw | 28,681 | 27,276 | 36,360 | 28,880 |

### [Examples 1 to 12 and Comparative Examples 1 to 3]

An underwater antifouling coating composition was prepared by mixing and stirring the respective components to be blended according to the formulation (parts by mass) shown in Table 2.

The blending amount of each component shown in Table 2 indicates the blending amount in the form as it is. For example, in Example 1, the blending amount of fatty acid amide in the form as it is (as a whole) is 1 part by mass. Since the solid content of the fatty acid amide is 20 mass%, the blending amount of the fatty acid amide itself in Example 1 is 0.2 parts by mass.

Details of each component used in examples and comparative examples are shown in Table 3.

### <Wood block resistance>

An epoxy resin anti-rust coating composition (trade name: "BANNOH 1500", manufactured by CHUGOKU MARINE PAINTS, LTD.) was applied to a sandblasted steel plate with a size of 150 mm in length × 70 mm in width × 1.6 mm in thickness so as to achieve a dry film thickness of 150 µm and dried, and then an epoxy resin binder coating composition (trade name: BANNOH 1500RZ, manufactured by CHUGOKU MARINE PAINTS, LTD.) was applied so as to achieve a dry film thickness of 100 µm and dried.

Subsequently, each of the prepared underwater antifouling coating compositions was applied once such that the dry film thickness of the resulting antifouling coating film was 300 µm, and dried at 23°C for 1 day to prepare a test plate.

A wood piece having a size of 30 mm in length × 30 mm in width × 10 mm in thickness was placed on a central part of the antifouling coating film of the prepared test plate, and a pressure of 40 kgf/cm² (3.9 MPa) was applied in a vertical direction (antifouling coating film direction) from above the wood piece for 20 minutes, then the state of the coating film surface was observed (the degree of deformation of the antifouling coating film was measured). The evaluation criteria are shown in Fig. 1.

In Fig. 1, reference numeral 10 denotes a wood piece, and reference numeral 20 denotes an antifouling coating film. Evaluation criterion 5 indicates that the antifouling coating film 20 is not deformed and is in the best state. Evaluation criterion 4 indicates a good state in which deformation of the antifouling coating film 20 is slightly observed, but no trace of the wood piece 10 is observed in the antifouling coating film 20. Evaluation criteria 3, 2, and 1 indicate a state in which the antifouling coating film 20 is deformed and a trace of the wood piece 10 is observed, and the degree of damage (deformation) is in the order of 3 < 2 < 1. The results are shown in Table 2.

### <Dynamic antifouling property>

An epoxy resin anti-rust coating composition (trade name: "BANNOH 1500", manufactured by CHUGOKU MARINE PAINTS, LTD.) was applied to a sandblasted steel plate (length 100 mm × width 200 mm × thickness 2.3 mm) so as to achieve a dry film thickness of 150 µm and dried, and then an epoxy resin binder coating composition (trade name: BANNOH 1500RZ, manufactured by CHUGOKU MARINE PAINTS, LTD.) was applied so as to achieve a dry film thickness of 100 µm and dried.

Subsequently, each of the prepared underwater antifouling coating compositions was applied once so that the dry film thickness of the resulting antifouling coating film was 200 µm, and dried under condition of 25°C for 7 days to prepare a test plate with an antifouling coating film. The coating application was performed three times at a pace of once per a day.

The prepared test plate with an antifouling coating film was attached to a cylinder rotating at a speed of about 15 knots of the surface of the test plate at a position of about 0.5 meters below the water surface in Hiroshima bay and immersed. The area occupied by aquatic organisms on the antifouling coating film was measured 6 months after the immersion in this immersion condition was started, and the dynamic antifouling property of the antifouling coating film was evaluated according to the following evaluation criteria for a dynamic antifouling property based on the area occupied by aquatic organisms. The results are shown in Table 2.

In this immersion condition, fouling by aquatic organisms, particularly slime and plant marine organisms is likely to occur due to the characteristics of the immersion sea area and conditions.

### (Evaluation criteria for dynamic antifouling property based on area occupied by aquatic organisms)

5: The total area of the part occupied by aquatic organisms is less than 10% with respect to 100% of the entire surface (whole) of the antifouling coating film.
4: The area is 10% or more and less than 20% of the whole.
3: The area is 20% or more and less than 40% of the whole.
2: The area is 40% or more and less than 70% of the whole.
1: The area is 70% or more of the whole.

### <Consumption degree water temperature dependence of antifouling coating film>

Each of the prepared underwater antifouling coating compositions was applied to a hard vinyl chloride plate having a size of 50 mm in length × 50 mm in width × 1.5 mm in thickness using an applicator such that a dry coating film had a thickness of about 200 µm, and was dried indoors at room temperature (about 20°C) for 7 days to prepare a test plate. For each underwater antifouling coating composition, two test plates were prepared in the same manner.

The prepared test plate was attached to the side surface of a rotary drum installed in a thermostatic bath containing seawater at 25°C or 40°C, and rotated at a peripheral speed of 15 knots. The amount of decrease in the film thickness of the antifouling coating film after 10 months from the start of rotation was measured, and the consumption degree water temperature dependence was calculated from the following formula. The results are shown in Table 2.

Consumption degree water temperature dependence = (amount of decrease in film thickness due to immersion in sea water at 40°C for 10 months)/(amount of decrease in film thickness due to immersion in sea water at 25°C for 10 months)

The consumption degree water temperature dependence of the antifouling coating film formed from the underwater antifouling coating composition obtained in examples is lower than the consumption degree water temperature dependence of the antifouling coating film formed from the underwater antifouling coating composition obtained in Comparative Example 2, and the change in the coating film consumption degree depending on, for example, the sea area where the ship navigates is small. Therefore, there is a low risk that the substrate as the base is exposed due to excessive consumption of the antifouling coating film, and fouling of the substrate occurs when the ship navigates in a high-temperature sea area more than expected.

**[Table 2]**

| | | Example | | | | | | | | | | | | Comparative Example | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 | 3 |
| (A) | Copolymer solution (A-1) | 25 | | | | | | | 25 | | | | | | | 50 |
| | Copolymer solution (A-2) | | 25 | | | 25 | 25 | 17 | | 25 | 25 | 29 | 20 | | 25 | |
| | Copolymer solution (A-3) | | | 25 | | | | | | | | | | | | |
| | Copolymer solution (A-4) | | | | 25 | | | | | | | | | | | |
| (B) | Rosin compound 1 | 1.5 | 1.5 | 1.5 | 1.5 | 2 | 3 | 4 | 1.5 | 0.9 | 1.5 | 1.8 | 1.2 | 1.5 | | 3 |
| | Rosin monomer | 1.5 | 1.5 | 1.5 | 1.5 | 1 | | 3 | 1.5 | 2.1 | 1.5 | 1.8 | 1.2 | 1.5 | 3 | 3 |
| (C) | Cuprous oxide | 48 | 48 | 48 | 48 | 48 | 48 | 48 | 48 | 48 | 35 | 32 | 58 | 48 | 48 | 16 |
| | Copper pyrithione | 2 | 2 | 2 | 2 | 2 | 2 | 2 | 0.8 | 2 | 2 | 2 | 1 | 2 | 2 | 2 |
| | DCOIT | | | | | | | | 0.5 | | | | | | | |
| | Medetomidine | | | | | | | | 0.1 | | 0.1 | 0.2 | | | | |
| (D) | Red iron oxide | 2 | 2 | 2 | 2 | 2 | 2 | 2 | 2 | 2 | 5 | 5 | 2 | 2 | 2 | 2 |
| | Zinc oxide | 6 | 6 | 6 | 6 | 6 | 6 | 6 | 6 | 6 | 10 | 8 | 4 | 6 | 6 | 6 |
| | Talc | 4 | 4 | 4 | 4 | 4 | 4 | 4 | 4 | 4 | 4 | 4 | 3 | 4 | 4 | 5 |
| (E) | Xylene | 8 | 8 | 8 | 8 | 8 | 8 | 12 | 7.1 | 8 | 13.9 | 14.2 | 7.6 | 18 | 8 | 11 |
| | PGM | | | | | | | | 0.9 | | | | | | | |
| (F) | Plasticizer | | | | | | | | 0.5 | | | | | | | |
| (G) | Fatty acid amide | 1 | 1 | 1 | 1 | 1 | 1 | 1 | 1 | 1 | 1 | 1 | 1 | 1 | 1 | 1 |
| | Oxidized polyethylene | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| (H) | Ethyl silicate | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Calcium sulfate | | | | | | | | 0.1 | | | | | | | |
| (I) | Acrylic resin | | | | | | | | | | | | | 15 | | |
| Total (pats by mass) | | 100 | 100 | 100 | 100 | 100 | 100 | 100 | 100 | 100 | 100 | 100 | 100 | 100 | 100 | 100 |

| ▪ Calculated value | | | | | | | | | | | | | | | | |
|---|---|---|---|---|---|---|---|---|---|---|---|---|---|---|---|---|
| Coating material solid content (mass%) | | 81.0 | 80.9 | 80.6 | 80.8 | 80.9 | 80.9 | 80.1 | 81.0 | 80.9 | 75.0 | 73.1 | 83.3 | 80.8 | 80.9 | 68.1 |
| Amount of (A) + (B) in coating material solid content (mass%) | | 22 | 22 | 22 | 22 | 22 | 22 | 22 | 22 | 22 | 24 | 29 | 17 | 4 | 22 | 53 |
| (B2) / (B1) | | 0.14 | 0.14 | 0.14 | 0.14 | 0.20 | 0.33 | 0.17 | 0.14 | 0.08 | 0.14 | 0.14 | 0.14 | 0.14 | 0.00 | 0.14 |
| (B) / (A) | | 0.20 | 0.20 | 0.20 | 0.20 | 0.20 | 0.20 | 0.68 | 0.20 | 0.20 | 0.20 | 0.21 | 0.20 | - | 0.20 | 0.20 |
| (B2) / (A) | | 0.02 | 0.02 | 0.03 | 0.03 | 0.03 | 0.05 | 0.10 | 0.02 | 0.01 | 0.02 | 0.03 | 0.02 | - | 0.00 | 0.02 |

| ▪ Results | | | | | | | | | | | | | | | | |
|---|---|---|---|---|---|---|---|---|---|---|---|---|---|---|---|---|
| Wood block resistance | | 4 | 4 | 4 | 4 | 4 | 4 | 3 | 4 | 4 | 4 | 4 | 4 | 2 | 3 | 1 |
| Dynamic antifouling property | | 4 | 4 | 5 | 4 | 4 | 4 | 5 | 4 | 5 | 5 | 4 | 4 | 1 | 4 | 1 |
| Consumption degree water temperature dependence | | 1.9 | 1.8 | 2.0 | 1.9 | 1.8 | 1.7 | 1.6 | 1.8 | 2.0 | 1.9 | 2.2 | 1.9 | 1.2 | 3.3 | - |

**[Table 3]**

| Classification | Component name | Details |
|---|---|---|
| (B) | Rosin compound 1 | Manufactured by Arakawa Chemical Industries, Ltd., acid value: 170, monomer : dimer = 75 : 25 |
| | Rosin monomer | Gum rosin WW, made in China, acid value: 170 |
| (C) | Cuprous oxide | Manufactured by NC TECH Co., Ltd., "Cuprous oxide NC-301" |
| | Copper pyrithione | Manufactured by Arch UK Biocides Ltd., "Copper Omadine Powder" Chemical formula: Cu(-S-C₅H₄N-O-)₂ |
| | DCOIT | Manufactured by Rohm and Haas Japan K.K., "SEA NINE 211N", chemical name: 4,5-dichloro-2-n-octyl-4-isothiazolin-3-one, solid content: 30 mass% xylene solution |
| | Medetomidine | Manufactured by I-tech AB, "Selektope", chemical name: (+/-)-4-[1-(2,3-dimethylphenyl)ethyl]-1H-imidazole |
| (D) | Red iron oxide | Manufactured by Morishita Bengara Kogyo K.K., "Bengara No. 404" |
| | Zinc oxide | Manufactured by Hakusui Tech Co., Ltd., "Zinc Oxide Grade 2", median diameter (D50): 0.7 to 1.1 µm |
| | Talc | Manufactured by Takehara Kagaku Kogyo Co., Ltd., "TTK Talc" |
| (E) | Xylene | Industrial xylene (mixture of ortho-, meta-, para-xylene, and ethylbenzene) |
| | PGM | Propylene glycol monomethyl ether |
| (F) | Plasticizer | Manufactured by Daihachi Chemical Industry Co., Ltd., "Daiffaty 101", benzyl alcohol/adipic acid/ester compound of diethylene glycol monomethyl ether |
| (G) | Fatty acid amide | Manufactured by Kusumoto Chemicals, Ltd., "Disparlon 6900-20X", solid content: 20 mass% |
| | Oxidized polyethylene | Manufactured by Itoh Oil Chemicals, Co., Ltd., "A-S-A D-120", solid content: 20 mass% |
| (H) | Ethyl silicate | Manufactured by Colcoat Co., Ltd., "Ethyl Silicate 28" |
| | Calcium sulfate | Manufactured by SAN ESU GYPSUM CO., LTD., "AS Gypsum" |
| (I) | Acrylic resin | Manufactured by Mitsubishi Chemical Corporation, "Dianal BR-106" acrylic copolymer |

The content ratio of the rosin compound monomer and the rosin compound multimer (dimer) in "Rosin compound 1" in Table 3 is the peak area ratio of GPC measured under the following conditions.

### · GPC conditions

Apparatus: "HLC-8420GPC" (manufactured by Tosoh Corporation)
Column: one "TSKgel guardcolumn SuperH-L" (4.6 mm (inner diameter), 3.5 cm (length) manufactured by Tosoh Corporation), one "TSKgel SuperH2000" (6 mm (inner diameter), 15 cm (length) manufactured by Tosoh Corporation), and two "TSKgel SuperH4000" (6 mm (inner diameter), 15 cm (length) manufactured by Tosoh Corporation)
Eluent: tetrahydrofuran (THF)
Flow rate: 0.600 mL/min
Detector: RI
Column thermostat temperature: 40°C
Standard substance: polystyrene

Sample preparation method: The rosin compound 1 whose concentration was adjusted with THF so that the solid content concentration was 1.5 mass% was filtered through a membrane filter (0.45 µm), and the obtained filtrate was used as a GPC measurement sample.

### Reference Signs List

- 10: Wood piece
- 20: Antifouling coating film

## Claims

1. An underwater antifouling coating composition, comprising:
a hydrolyzable (co)polymer (A) having a constituent unit derived from a hydrolyzable group-containing monomer, a rosin compound (B), and an antifouling agent (C), wherein
the rosin compound (B) contains a rosin compound monomer (B1) and a rosin compound multimer (B2),
a content of the multimer (B2) with respect to 1 part by mass of the content of the monomer (B1) is 0.07 to 5 parts by mass, and
a total content of the (co)polymer (A) and the rosin compound (B) with respect to 100 mass% of a solid content of the underwater antifouling coating composition is 5 to 40 mass%.

2. The underwater antifouling coating composition according to claim 1, wherein the (co)polymer (A) contains a constituent unit derived from a silyl ester group-containing monomer (a1) represented by a formula (1) below:
X-SiR¹R²R³ (1)
in the formula (1), X represents an ethylenically unsaturated acyloxy group, and R¹ to R³ each independently represent a linear or branched alkyl group having 1 to 20 carbon atoms, an alicyclic alkyl group having 3 to 10 carbon atoms, or an aromatic group having 6 to 20 carbon atoms.

3. The underwater antifouling coating composition according to claim 2, wherein the R¹ to R³ are each an isopropyl group.

4. The underwater antifouling coating composition according to claim 2, wherein the silyl ester group-containing monomer (a1) is triisopropylsilyl methacrylate.

5. The underwater antifouling coating composition according to claim 1, wherein a content of the rosin compound (B) with respect to 1 part by mass of the content of the (co)polymer (A) is 0.1 to 2 parts by mass.

6. The underwater antifouling coating composition according to claim 1, wherein the content of the multimer (B2) with respect to 1 part by mass of the content of the (co)polymer (A) is 0.01 to 1 part by mass.

7. The underwater antifouling coating composition according to claim 1, wherein
the antifouling agent (C) contains cuprous oxide, and
a content of the cuprous oxide with respect to 100 mass% of the solid content of the underwater antifouling coating composition is 30 to 80 mass%.

8. The underwater antifouling coating composition according to claim 1, further comprising a pigment (D).

9. An antifouling coating film formed from the underwater antifouling coating composition according to any one of claims 1 to 8.

10. A substrate with an antifouling coating film, comprising a substrate and the antifouling coating film according to claim 9.

11. A method for producing a substrate with an antifouling coating film, comprising a step of providing the underwater antifouling coating composition according to any one of claims 1 to 8 on at least a part of a substrate, followed by drying.

12. An antifouling method for a substrate, comprising a step of forming the antifouling coating film according to claim 9 on at least a part of a substrate.
